(19) Europäisches Patentamt
European Patent Office
Office européen des brevets

(11) **EP 2 712 685 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(51) Int Cl.:
***B21B 1/28*** *(2006.01)*

(21) Anmeldenummer: **12199475.0**

(22) Anmeldetag: **27.12.2012**

(54) **Verfahren zum Herstellen eines Stahlflachprodukts mit hohem Reflektionsvermögen, Stahlflachprodukt und Spiegelelement für Solarkonzentratoren**

Method for producing a flat steel product with high reflection capacity, flat steel product, and mirror element for solar concentrators

Procédé de fabrication d'un produit plat en acier avec un pouvoir de réflexion élevé, produit plat en acier et élément de miroir pour concentrateurs solaires

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2012 DE 102012109287**

(43) Veröffentlichungstag der Anmeldung:
**02.04.2014 Patentblatt 2014/14**

(73) Patentinhaber:
• **ThyssenKrupp Steel Europe AG**
  **47166 Duisburg (DE)**
• **Outokumpu Nirosta GmbH**
  **47807 Krefeld (DE)**

(72) Erfinder:
• **Glass, Roman Dr.**
  **44135 Dortmund (DE)**
• **Karsten, Utz**
  **57555 Mudersbach (DE)**
• **Kazmierski, Jörg**
  **57078 Siegen (DE)**
• **Kolbe, Nina Dr.**
  **44787 Bochum (DE)**
• **Krautschick, Hans- Joachim Dipl.Phys. Dr. rer. nat**
  **42657 Solingen (DE)**
• **Puls, Stefan Peter Dr.**
  **44141 Dortmund (DE)**
• **Schauer-Paß, Janine Dr.**
  **44803 Bochum (DE)**
• **Schuhmacher, Bernd Dr.**
  **44227 Dortmund (DE)**
• **Wiemer, Dirk Dr.**
  **40593 Düsseldorf (DE)**
• **Wörster, Frank**
  **57250 Netphen (DE)**
• **Die andere Erfinder haben auf ihre Nennung verzichtet.**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 0 597 169**   **EP-A1- 0 694 620**
**DE-A1- 19 505 324**   **US-A- 3 556 874**
**US-A- 5 986 205**

**Beschreibung**

Die Erfindung betrifft ein Verfahren zum Herstellen eines Stahlflachprodukts mit einem hohen Reflektionsvermögen im Strahlungsbereich der Sonne, ein entsprechend beschaffenes Stahlflachprodukt und ein Spiegelelement für Solarkonzentratoren.

Wenn hier von Stahlflachprodukten die Rede ist, so sind damit, soweit nicht anders angegeben, aus Kohlenstoffstahl, nicht rostendem Stahl oder Edelstahl hergestellte Stahlbänder oder Stahlbleche sowie daraus hergestellte Platinen, Zuschnitte und desgleichen gemeint.

Spiegelelemente der hier in Rede stehenden Art werden beispielsweise in der Solarthermie eingesetzt, um das auf sie fallende Sonnenlicht zu bündeln und auf ein Rohr oder desgleichen zu konzentrieren, das ein Wärmeträgermedium führt. Durch den Einsatz solcher so genannter "Solarkonzentratoren" kann eine höhere Effizienz bei der Ausnutzung der Sonnenenergie erzielt werden. Dabei stellt sich nicht nur die Anforderung, dass die Spiegelelemente ein optimales Reflexionsvermögen im Strahlungsbereich des Sonnenlichts aufweisen, sondern solche Spiegelelemente sollen auch noch robust gegen die im Gebrauch auftretenden mechanischen Belastungen und kostengünstig herstellbar sein.

Zur Anwendung kommen Spiegelelemente der hier in Rede stehenden Art in der Kraftwerkstechnologie, wie z. B. bei Parabolrinnen-, Fresnel-, Dish-Stirling- und Turmkraftwerken. Alle diese Systeme haben gemein, dass die solare Strahlung konzentriert werden muss.

Derzeit werden für Solarkonzentratoren Glasträger verwendet, die einseitig mit Silber, Aluminium und anderen Bestandteilen zur Reflexion bedampft sind.

Alternativ dazu ist es beispielsweise aus der US 5,912,777 bekannt, dass sich Stahlflachprodukte, die auch bei mehr als 500 °C betragenden Temperaturen noch ein hohes Reflektionsvermögen aufweisen, dadurch hergestellt werden können, dass das jeweilige Stahlsubstrat poliert wird, bis der für ein hohes Reflektionsvermögen erforderliche niedrige Rauwert erreicht ist.

Wenn hier vom "arithmetischen Mittenrauwert Ra" die Rede ist, ist damit der gemäß DIN EN ISO 4287 bestimmte Wert gemeint. Bei einer polierten Stahlflachproduktoberfläche weist der arithmetische Mittenrauwert Ra keine ausgeprägte Vorzugsrichtung auf. Stattdessen zeigt sich an der Oberfläche des polierten Produkts eine Oberflächenstruktur, die durch eine chaotische Ausrichtung der beim Polieren hinterlassenen Bearbeitungsspuren gekennzeichnet ist.

Der mit dem Polieren einer Stahlflachproduktoberfläche verbundene Aufwand ist erheblich, da hierzu nicht nur speziell eingerichtete Maschinen eingesetzt, sondern auch eine sehr lange Bearbeitungsdauer in Kauf genommen werden muss.

Es sind daher verschiedene Versuche gemacht worden, hochglänzende Stahloberflächen ohne Polieren zu erzeugen. So ist beispielsweise in der JP 7155809 A, der JP 199876109 A oder der JP 1992340706 A jeweils vorgeschlagen worden, die Bleche unter Verwendung von hochglanzpolierten Arbeitswalzen, deren Mittenrauigkeit Ra im Bereich von 0,01 - 0,06 $\mu$m liegt, kaltzuwalzen. Die auf diesem Wege an einem Stahlflachprodukt erzeugbaren Oberflächen-Werte erreichen jedoch arithmetische Mittenrauigkeiten von bestenfalls Ra = 0,05 $\mu$m. Der Glanz und das damit einhergehende Reflexionsvermögen einer derart beschaffenen Oberfläche reichen in der Regel nicht aus, um die hohen Anforderungen zu erfüllen, die an aus solchen Stahlflachprodukten erzeugten Spiegelelementen heute gestellt werden.

Neben dem voranstehend erläuterten Stand der Technik ist aus der EP 0 694 620 A1 ein Verfahren zur Herstellung eines rostfreien Stahlstahlblechs mit hervorragendem Oberflächenglanz bekannt. Dabei wird in einem oder mehreren Gerüsten eines Tandemwalzwerks ein Kaltwalzvorgang mit einer Arbeitswalze durchgeführt, die ein zwischen 25.000 und 70.000 kg/mm$^2$ liegendes Elastizitätsmodul aufweist. Die Arbeitswalze kann aus einer Wolframcarbid basierenden Hartmetalllegierung bestehen und einen 150 - 400 mm betragenden Durchmesser aufweisen. Der Durchmesser einer Arbeitswalze in einem letzten Gerüst der Tandemstraße soll kleiner oder gleich dem Durchmesser einer Arbeitswalze im vorhergehenden Stand sein und die im letzten Schritt des Kaltwalzens erzielte Dickenreduktion soll 25 % bis 60 % betragen.

Aus der DE 195 05 324 A1 ist des Weiteren ein Verfahren bekannt, mit dem sich kaltgewalzte Stahlbänder, insbesondere Edelstahlbänder, in einem kontinuierlichen Behandlungsprozess ohne Zwischenlagerungen von Coils in wirtschaftlicher Weise so hergestellt werden können, dass sie die jeweils in Bezug auf ihre Planheit, Sauberkeit, Oberflächenrauhigkeit und Glanz verlangten Eigenschaften aufweisen. Hierzu sieht dieses bekannte Verfahren vor, dass bei der Herstellung von kaltgewalzten Stahlbändern ein Warmband in einem kontinuierlichen Behandlungsprozess streckbiegegerichtet, beidseitig strahlentzundert und/oder gebürstet, gebeizt, auf Bandenddicke kaltgewalzt, unter Schutzgas geglüht, dressiert und in Planlage gerichtet wird. Daran kann sich ein Besäumen, Trennen und Aufwickeln zu Coils anschließen.

Aus der US 3,556,874 A ist ein weiteres Verfahren bekannt, mit dem sich Edelstahlflachprodukte mit einer gezielt eingestellten Oberflächenbeschaffenheit herstellen lassen sollen. Dazu wird das jeweilige Edelstahlband zuerst auf die gewünschte Dicke kaltgewalzt, wobei hohe Verformungsgrade eingestellt werden, um eine Oberfläche mit hohem Glanz zu erzielen. Dann wird das Kaltband einer Glühung und daran anschließend einem Dressierwalzen unterzogen.

Beim Dressierwalzen werden Arbeitswalzen eingesetzt, deren mit dem Edelstahlband in Kontakt kommende Umfangsflächen so strukturiert sind, dass sie in die Oberfläche des Edelstahlbands die gewünschte Oberflächenstruktur einprägen.

Aus der US 5,986,205 A ist ein rostfreies Stahlblech bekannt, das als Substrat für eine Halbleiter-Solarzelle vorgesehen ist. Das Stahlblech hat kleine Wellen mit Wellungen entlang der Walzrichtung, in der das Stahlblech gewalzt worden ist, und eine Oberflächenrauheit Rz im Bereich von 0,3 - 1,4 $\mu$m sowie einen Rmax-Wert von 0,5 - 1,7 $\mu$m. Um ein solches Blech herzustellen, wird ein rostfreies Stahlband mit einem Reduktionsverhältnis von mindestens 20 % bei einer Walzgeschwindigkeit von wenigstens 400 m/min kaltgewalzt. Im letzten Schritt des Kaltwalzens werden Arbeitswalzen verwendet, deren Oberfläche mit einer bestimmten minimierten Rauigkeit poliert sind. Anschließend wird das erhaltene Band unter einer Open-Air-Atmosphäre geglüht und dann elektrolytisch in einer Salpetersäurelösung gebeizt.

Aus der EP 0 597 169 A1 ist schließlich ein Verfahren zum Kaltwalzen von Metallwerkstoffen bekannt, mit dem den Oberflächen eines Metallblechs Glanz verliehen werden soll. Dieses bekannte Verfahren umfasst die Schritte: Kaltwalzen des Metallblechs mittels eines Walzen-Schrägwalzvorgangs mit einer oberen Arbeitswalze und einer unteren Arbeitswalze, die einander in einer Ebene parallel zum Metallblech kreuzen, um dadurch eine Scherdeformation auf die Oberflächen des Metallblechs in der Breiten- bzw. Querrichtung desselben durch eine relative Geschwindigkeitsdifferenz in der Querrichtung des Metallblechs, die zwischen den Oberflächen der einander kreuzenden Arbeitswalzen und dem Metallblech erzeugt wird, auszuüben, und Belassen des Einflusses der Scherdeformation an den Oberflächen des Metallblechs nach dem Walzvorgang.

Vor dem Hintergrund des voranstehend erläuterten Standes der Technik bestand die Aufgabe der Erfindung darin, ein Verfahren zu nennen, mit dem es auf kosteneffektive Weise möglich ist, ein Stahlflachprodukt zu erzeugen, das im fertig gewalzten Zustand, d. h. ohne zusätzliche Feinbearbeitung, wie Polieren oder Schleifen, ein Reflektionsvermögen aufweist, welches das entsprechend erzeugte Stahlflachprodukt für die Herstellung von Solarkonzentratoren oder andere Anwendungen geeignet macht, bei denen ein hohes Reflektionsvermögen für Sonnenlicht gefordert wird. Ebenso sollten ein entsprechend beschaffenes Stahlflachprodukt und eine besonders wirtschaftliche Verwendung eines solchen Stahlflachprodukts genannt werden.

In Bezug auf das Verfahren besteht die erfindungsgemäße Lösung dieser Aufgabe darin, dass bei der Herstellung eines Stahlflachprodukts mit einem hohen Reflektionsvermögen die in Anspruch 1 angegebenen Arbeitsschritte absolviert werden.

Ein erfindungsgemäßes, die oben genannte Aufgabe lösendes Stahlflachprodukt weist die in Anspruch 10 angegebenen Merkmale auf, wobei hervorzuheben ist, dass diese Merkmale am fertig nachgewalzten, d. h. nicht weiter mechanisch feinbearbeiteten Stahlflachprodukt vorhanden sind. Zur Herstellung eines solchen Stahlflachprodukts ist insbesondere das erfindungsgemäße Verfahren geeignet.

Optimal wirtschaftlich nutzen lässt sich ein erfindungsgemäßes Stahlflachprodukt für die Herstellung von Solarkonzentratoren, wobei auch hier hervorzuheben ist, dass die erfindungsgemäße Verwendung des erfindungsgemäßen Stahlflachprodukts im fertig nachgewalzten, d. h. nicht weiter mechanisch bearbeiteten, insbesondere unpolierten, Zustand erfolgt.

Die Erfindung geht von der Erkenntnis aus, dass eine Stahlflachproduktoberfläche eine hohe gerichtete Reflexion aufweist, wenn die betreffende Oberfläche eine extrem niedrige Oberflächenrauheit aufweist, deren arithmetische Mittenrauigkeit Ra viel kleiner als 0,1 $\mu$m ist.

Um eine derart glatte, hohe Glanzwerte erreichende Oberfläche zu erzeugen, schlägt die Erfindung eine Walzstrategie vor, die sich auf konventionellen Walzgerüsten durchführen lässt und dennoch zu einem optimal geeigneten Produkt führt. Dabei eignet sich das erfindungsgemäße Verfahren zur Verarbeitung von Stahlflachprodukten aus Kohlenstoffstahl oder nicht rostendem Stahl gleichermaßen.

Im ersten Arbeitsschritt a) des erfindungsgemäßen Verfahrens wird ein optimalerweise bis zu 2,5 mm dickes, warm- oder kaltgewalztes Stahlflachprodukt bereitgestellt, bei dem mindestens eine der Oberflächen einen arithmetischen Mittenrauwert Ra von weniger als 2,5 $\mu$m aufweist.

Das derart beschaffene, insbesondere als Coil angelieferte Vormaterial wird anschließend im Arbeitsschritt b) unter Berücksichtigung mindestens folgender Maßgaben kaltgewalzt:

- Das Kaltwalzen erfolgt in mehreren Stufen, d. h. in mehreren Walzstichen. Die Anzahl der absolvierten Walzstiche richtet sich dabei nach der Ausgangsdicke und der jeweils geforderten Enddicke. Typischerweise sind bei der Durchführung des erfindungsgemäßen Verfahrens mindestens zehn Walzstiche erforderlich, wobei regelmäßig mindestens zwölf Walzstiche durchgeführt werden.

- Die über das Kaltwalzen erzielte Gesamtverformungsrate beträgt 75 - 90 %. Ausgehend von einer typischen Ausgangsdicke von beispielsweise 2,5 mm liegt die Dicke des nach dem Kaltwalzen erhaltenen Bands folglich im Bereich von 0,625 - 0,25 mm. Für die Verformung zu Spiegelelementen für Solarkonzentratoren vorgesehene Stahlflachprodukte werden dabei so kaltgewalzt, dass sie im fertig gewalzten Zustand beispielsweise bis zu 0,4 mm dick sind.

- Die beim Kaltwalzen erzielte Verformungsrate nimmt von Walzstich zu Walzstich ab. Das Kaltwalzen beginnt somit im ersten Walzstich mit einer hohen, insbesondere mindestens 20 % betragenden Verformungsrate. Bei jedem folgenden Walzstich wird dann eine niedrigere Verformungsrate eingestellt als beim jeweils vorangehenden. Optimalerweise wird dabei die Verformungsrate von Walzstich zu Walzstich um jeweils 5 - 10 % vermindert. D. h., die Verformungsrate im jeweiligen Walzstich entspricht 90 - 95 % der Verformungsrate des vorangegangenen Walzstichs. Im letzten Walzstich wird das Stahlflachprodukt dann mit der niedrigsten, insbesondere weniger als 10 % betragenden Verformungsrate kaltgewalzt.

Die im jeweiligen Walzstich n erzielte Verformungsrate e berechnet sich dabei wie folgt:

$$e_n \; [\%] \; = \; (De-Da)/De$$

mit De = Dicke des Stahlflachprodukts vor dem Eintritt in den Walzstich n und

Da = Dicke des Stahlflachprodukts nach dem jeweiligen Walzstich n

Mit der Gesamtverformung eg ist dementsprechend die über den gesamten Walzprozess erzielte Differenz zwischen der Dicke De des Stahlflachprodukts vor dem Kaltwalzen und der Dicke Da nach Abschluss des Kaltwalzens bezogen auf die Dicke Da bezeichnet.

- Der Walzdruck wird in Abhängigkeit von der Festigkeit des verarbeiteten Materials derart eingestellt, dass er im ersten Walzstich 200 - 800 MPa und im letzten Walzstich 1000 - 4000 MPa beträgt. Beispielsweise beträgt bei einer Gesamtverformungsrate von 84 % bei einem Stahlflachprodukt, das aus einem Stahl mit der Werkstoffnummer 1.4301 hergestellt ist, der Walzdruck im ersten Walzstich 400 MPa und im letzten Walzstich 1600 MPa.

- Das Kaltwalzen erfolgt unter Zugabe eines Walzöls, dessen Viskosität 5 - 10 mm$^2$/s bei 40 °C beträgt.

- Die Walzgeschwindigkeit während des Kaltwalzens ist größer als 200 m/min. Auf diese Weise wird während des jeweiligen Kaltwalzstichs ein gleichmäßiger Ölfilm zwischen den Arbeitswalzen und dem Stahlflachprodukt aufrechterhalten.

Um dem Stahlflachprodukt die geforderte minimierte Oberflächenrauigkeit zu verleihen, wird schließlich das Kaltwalzen mindestens im letzten Walzstich, optimalerweise in den letzten vier Walzstichen, mit einer Arbeitswalze durchgeführt, deren mit dem Walzgut in Kontakt kommende Umfangsfläche einen arithmetischen Mittenrauwert Ra aufweist, der unterhalb des für die jeweilige Oberfläche des Stahlflachprodukts geforderten Mittenrauwert liegt, typischerweise weniger als 0,01 $\mu$m beträgt. Die Arbeitswalzen können dabei mehrfach ausgetauscht werden. So kann es zweckmäßig sein, die Arbeitswalzen im vorletzten und viertletzen Stich gegen speziell präparierte Arbeitswalzen mit einem Mittenrauwert Ra von $\leq 0,01$ $\mu$m auszutauschen. Der arithmetische Mittenrauwert Ra der vor dem Walzenwechsel eingesetzten Arbeitswalzen kann beispielsweise im Bereich von 0,08 $\mu$m oder darunter liegen.

In der Praxis kann das erfindungsgemäße Verfahren auf einem konventionellen 20-Rollen-Gerüst durchgeführt werden.

Im Arbeitsschritt c) wird das erhaltene Kaltband zur Entfestigung einer beispielsweise in einer konventionellen Blankglühanlage durchgeführten Kaltbandglühbehandlung unterzogen. Die Glühung erfolgt dabei unter einer Schutzgasatmosphäre mit einem Wasserstoffanteil von mehr 50 Vol.-%. Im Fall, dass das Stahlflachprodukt aus einem nicht rostenden Stahl besteht, der einen Cr-Gehalt von mehr als 10,5 Gew.-% aufweist, sollte dabei das Partialdruckverhältnis von Wasserdampf zu Wasserstoff $p(H_2o)/P(H_2) < 10^{-4}$ betragen, während bei einem Cr-Gehalt des Stahls von bis zu 10,5 Gew.-% ein Partialdruckverhältnis $(H_2O)/P(H_2) < 10^{-3}$ ausreichend ist.

Im Arbeitsschritt d) wird das geglühte und erfindungsgemäß kaltgewalzte Stahlflachprodukt beispielsweise in einem Duo-Walzgerüst in einem oder mehreren, insbesondere zwei Walzstichen nachgewalzt. Der während dieses Nachwalzens erzielte Verformungsgrad beträgt 0,5 - 2 %. Das Nachwalzen dient, wie üblich, zur Beseitigung einer ausgeprägten Streckgrenze, die nach der Glühbehandlung vorliegt und die sogenannte "Lüder'sche Linien" hervorrufen kann. Das Nachwalzen erfolgt dabei trocken, um bei den geringen Umformgraden diesen Effekt zu erzielen. Die Duo-Walzen sind vorgeschliffen und weisen an ihrer mit dem Walzgut in Kontakt kommenden Oberfläche typischerweise einen arithmetischen Mittenrauwert Ra von weniger als 0,03 $\mu$m auf.

Das in der erfindungsgemäßen Weise kaltgewalzte Stahlflachprodukt besitzt als solches im fertig nachgewalzten Zustand an mindestens einer seiner Oberflächen einen arithmetischen Mittenrauwert Ra von weniger als 0,03 $\mu$m,

insbesondere weniger als 0,02 $\mu$m. Wesentliches Kennzeichen eines erfindungsgemäßen Stahlflachprodukts ist dabei, dass der Mittenrauwert Ra eine ausgeprägte Vorzugsrichtung aufweist, die parallel zur Walzrichtung des Kaltwalzens ausgerichtet ist. So lassen sich bei einem erfindungsgemäß fertig nachgewalzten Stahlflachprodukt anhand von Topographieaufnahmen die Walzrichtungen eindeutig identifizieren.

Überraschend hat sich gezeigt, dass sich erfindungsgemäß ein Stahlflachprodukt erzeugen lässt, das bereits nach dem Nachwalzen einen nach DIN 67530 ermittelten Glanz von mehr als 1200 Glanzeinheiten und eine gerichtete Reflexion von mehr als 60 % besitzt, wobei in der Praxis regelmäßig eine gerichtete Reflexion von mehr als 80 %, insbesondere mehr als 90 %, erreicht wird. Erfindungsgemäße Stahlflachprodukte weisen damit ein Reflexionsvermögen auf, das mindestens gleich dem Reflexionsvermögen konventionell erzeugter und polierter Stahlflachprodukte ist.

Ein weiterer signifikanter Unterschied zwischen einem erfindungsgemäßen Stahlflachprodukt und einem konventionell kaltgewalzten und anschließend polierten Stahlflachprodukt besteht darin, dass die polierte Stahlflachproduktoberfläche eindeutig härter ist als die Oberfläche eines erfindungsgemäßen Stahlflachprodukts. So weisen erfindungsgemäße Stahlflachprodukte an ihrer reflektierenden Oberfläche typischerweise eine Oberflächenhärte von weniger als 4 GPa, insbesondere weniger als 3,5 GPa, auf. Dies höhere Oberfläche von in konventioneller Weise polierten Stahlflachprodukten ist mit einer durch den Polierprozess verursachten Kaltverfestigung der Oberfläche zu erklären, da das Polieren erst nach der rekristallisierenden Glühung erfolgt.

Um das Reflexionsvermögen weiter zu steigern, kann auf das erfindungsgemäß erzeugte und beschaffene Stahlflachprodukt ein reflektierendes Schichtsystem aufgebracht werden.

Der Auftrag der Beschichtung kann beispielsweise mittels Vakuumaufdampfverfahren, insbesondere im Durchlaufbeschichtungsverfahren, aufgebracht werden. Die Beschichtung besteht dabei aus mindestens einer reflektierenden Schicht, die beispielsweise aus einem oder mehreren der Elemente "Al, Ag, Sn" besteht. So kann das Blech mit einer Al-Ag-Legierung, mit Sn, mit einer Sn-Al-Legierung oder einer Sn-Ag-Legierung beschichtet werden. Als Bedampfungsverfahren können PVD-Prozesse, Magnetron-Sputtern, Elektronenstrahlverdampfen und desgleichen angewendet werden.

Um die als Reflexionsfläche dienende Oberfläche des erfindungsgemäß beschaffenen Stahlflachprodukts erforderlichenfalls langzeitstabil vor Korrosion zu schützen, kann alternativ oder ergänzend zu einer das Reflexionsvermögen erhöhenden Beschichtung eine organische oder anorganische Beschichtung auf das Stahlflachprodukt aufgetragen werden ("Toplayer").

Als anorganische Beschichtungen mit Barrierewirkung können beispielsweise $SnO_2$, $In_2O_3$, $Al_2O_3$, $SiO_2$, $TiO_2$, $ZrO_2$, aber auch amorphe Schichtsysteme wie Gläser bestehend z. B. aus $SiO_2/B_2O_3$-Borosilicatgläser, $SiO_2/P_2O_5$-Silicophosphatgläser oder $B_2O_3/P_2O_5$-Borophosphatgläser zum Einsatz kommen. Auch hier kann der Auftrag mittels PVD-Verfahren erfolgen, vorzugsweise durch Sputtern oder Atomic Layer Deposition, aber auch mittels nasschemischer Verfahren, wie das Sol-Gel-Beschichten mittels Spin- oder Dip-Coating.

Ebenso kommen als Schutzschichten Spin-on Glassysteme als Toplayer in Frage, bei denen Organo-Silicium bzw. Organo-Bor-Verbindungen zunächst mittels Spin- oder Dip-Coating appliziert werden und dann im Nachgang thermisch zu dichten Glasschichten zersetzt werden. Dieses Verfahren bietet Vorteile bei einer potentiellen kontinuierlichen Beschichtung mittels Coil-Coating.

Weiterhin können auch hybride Schichtsysteme wie Si:O:C:H-Schichten (Plasmapolymere) geeignet sein, die mittels CVD-Verfahren appliziert werden können.

Organische Toplayer-Schichtsysteme bestehend aus transparenten Lacken bieten ebenfalls die Möglichkeit einer kontinuierlichen Beschichtung.

Der in der voranstehend beschriebenen Weise beschaffene und aufgebrachte Toplayer schützt nicht nur vor Korrosion, sondern gleichzeitig vor abrasivem Verschleiß.

Nachfolgend wird die Erfindung anhand von Ausführungsbeispielen näher erläutert. Es zeigen:

Fig. 1    ein Diagramm, in dem für drei Stahlflachproduktproben die gerichtete Reflexion im solaren Spektralbereich über die Wellenlänge aufgetragen ist;

Fig. 2    die Oberflächentopographie einer erfindungsgemäß gewalzten Stahlflachproduktprobe;

Fig. 3    die Oberflächentopographie einer polierten Stahlflachproduktprobe;

Fig. 4    ein Diagramm, in dem für eine erfindungsgemäß kaltgewalzte Stahlflachproduktprobe die gerichtete Reflexion im solaren Spektralbereich über die Wellenlänge im rein kaltgewalzten Zustand und nach dem Auftrag einer Beschichtung aufgetragen ist;

Fig. 5    ein Diagramm, in dem schematisch der Stichplan des bei der Erzeugung erfindungsgemäßer Stahlflachprodukte durchlaufenen Kaltwalzens dargestellt ist.

Ein zur Erzeugung eines als Stahlband vorliegenden, für die Herstellung von Spiegelelementen für einen Solarkonzentrator bestimmten Stahlflachprodukts ist ein Vormaterial in Coilform eingesetzt worden, bei dem es sich um ein warmgewalztes, entzundertes Warmband handelte. Das 2,5 mm dicke Vormaterial bestand aus einem unter der Werkstoffnummer 1.4301 genormten Stahl und hatte einen gemäß DIN EN ISO 4287 bestimmten arithmetischen Mittenrauwert Ra von weniger als 2,4 $\mu$m.

Das Vormaterial ist in einem 20-Rollen-Gerüst in zwölf Stufen auf eine Enddicke von 0,4 mm abgewalzt worden. Die über das Kaltwalzen erzielte Gesamtumformung eg betrug demnach eg = (2,4 - 2)/2,4 = 83 %.

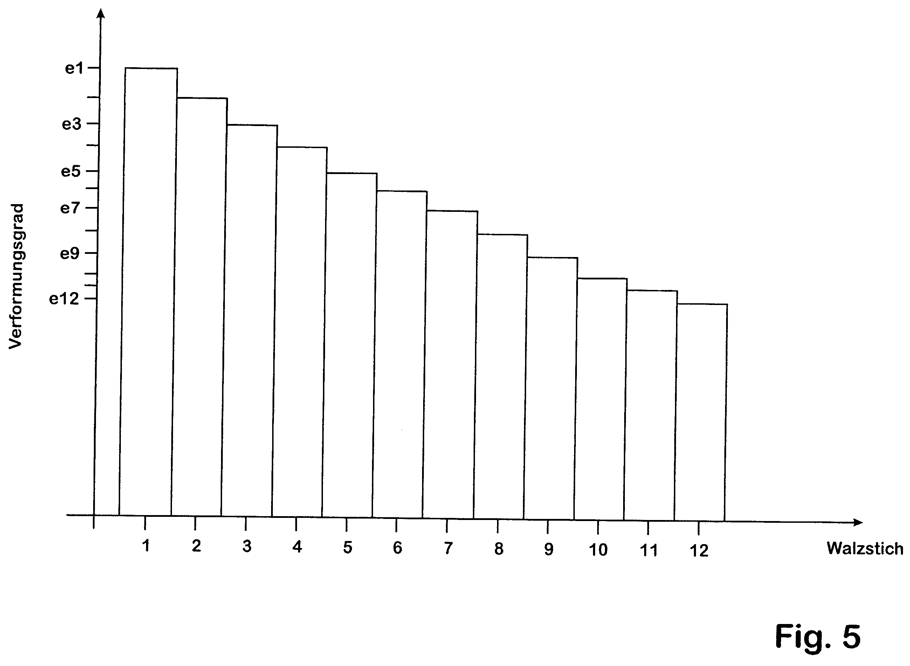

Im ersten Walzstich wurde mit einer Verformung e1 von mehr als 20 % gewalzt. In den elf anschließend durchgeführten Walzstichen wurde die Verformung von Stich zu Stich relativ zwischen 5 % und 10 % reduziert, so dass im letzten Walzstich des Kaltwalzens mit einer Verformung e12 von weniger als 10 % gewalzt wurde (Fig. 5).

Die Arbeitswalzen in den ersten acht Walzstichen hatten an ihrer mit dem kaltzuwalzenden Stahlflachprodukt in Kontakt kommenden Umfangsfläche einen arithmetischen Mittenrauwert Ra von 80 nm. Für den neunten, zehnten, elften und zwölften Walzstich wurden die Arbeitswalzen des 20-Rollen-Gerüsts gegen speziell präparierte Arbeitswalzen ausgetauscht, deren arithmetischer Mittenrauwert Ra kleiner als 10 nm war.

Der Walzdruck betrug während der zwölf Kaltwalzstiche im Durchschnitt 1600 MPa.

Jeder der Kaltwalzschritte wurde unter Zugabe eines Walzöls durchgeführt, dessen Viskosität 8 mm²/s bei 40 °C betrug. Um einen ausreichenden Ölfilm zwischen den Arbeitswalzen und dem Stahlflachprodukt aufrechtzuerhalten, wurde mit einer Walzgeschwindigkeit von mehr als 200 m/min gewalzt.

Das so erhaltene kaltgewalzte Stahlflachprodukt ist in einer Blankglühanlage unter Schutzgasatmosphäre mit einem Wasserstoffanteil größer als 50 % einer Kaltbandglühbehandlung unterzogen worden, wobei das Partialdruckverhältnis von Wasserdampf zu Wasserstoff $p(H_2O)/p(H_2)$ kleiner als $10^{-4}$ war.

Abschließend ist das geglühte Kaltband in einem Duo-Walzgerüst in zwei Stichen mit einer Walzkraft von 150 t trocken, d. h. ohne Öl oder Walzemulsion, nachgewalzt worden. Die Duo-Walzen hatten an ihren mit dem Stahlflachprodukt in Kontakt kommenden Umfangsflächen einen arithmetischen Mittenrauwert Ra von 20 nm.

In Tabelle 1 sind für zwei erfindungsgemäße, in der voranstehenden Weise verarbeiteten Stahlflachproduktproben E1,E2 die mittels Rasterkraftmikroskopie ermittelten Rauheitswerte, die mittels Weißlichtinterferometrie ermittelten Rauheitswerte und die gerichtete Reflexion im nach dem Nachwalzen erhaltenen Zustand angegeben. Ebenso sind in der Tabelle 1 zum Vergleich die entsprechenden Werte für eine in konventioneller Weise erzeugte und an ihrer untersuchten Oberfläche polierte Vergleichsprobe V eingetragen.

Tabelle 1

|  | Rauheit Ra [$\mu$m] | Rauheit Ra [$\mu$m] | Gerichtete Reflexion |
|---|---|---|---|
|  | WeißlichtInterferometrie | RasterkraftMikroskopie | Ohne Beschichtung |
| E1 | 0,023 | 0,012 | 63,3 |
| E2 | 0,015 | 0,012 | 64,4 |
| V | - | 0,004 | 65,4 |

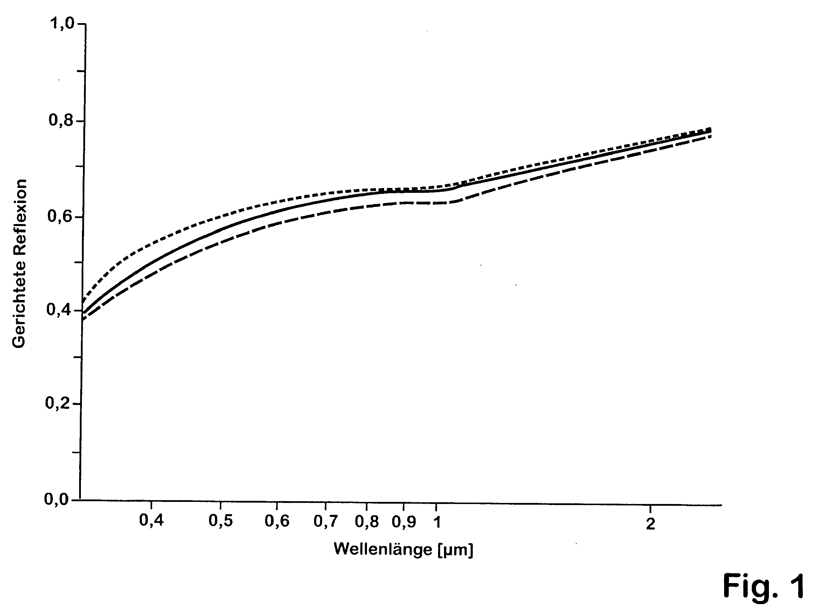

Das Ergebnis der Messung der gerichteten Reflexion im solaren Spektralbereich ist im Einzelnen in Fig. 1 gezeigt (Probe E1: durchgezogene Linie, Probe E2: gestrichelte Linie, Vergleichsprobe V: durchgezogene Linie). Es zeigt sich, dass die erfindungsgemäß erzeugten Proben bereits nach dem Nachwalzen im kaltgewalzten, nicht polierten Zustand ein Reflexionsvermögen besitzen, das im Wesentlichen gleich dem Reflexionsvermögen der mit erheblich größerem Aufwand zunächst walztechnisch erzeugten und dann polierten Vergleichsprobe ist.

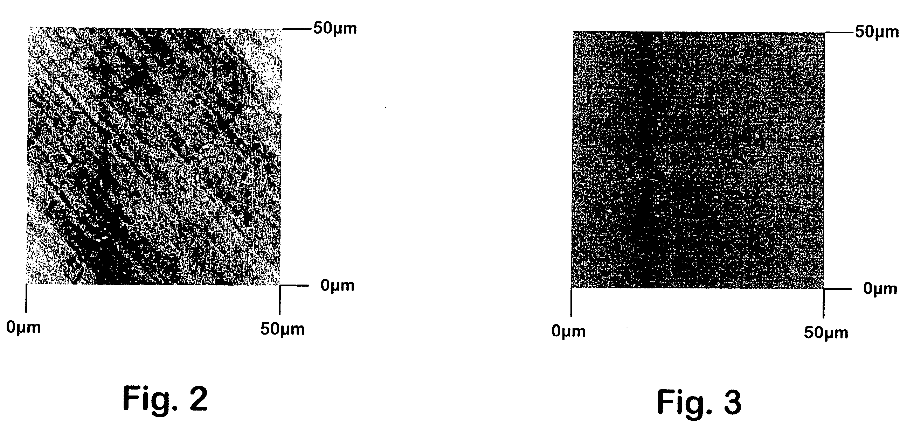

Es waren deutliche Unterschiede zwischen den erfindungsgemäß gewalzten Stahlflachprodukten und der zum Vergleich herangezogenen hochglanzpolierten Probe bzgl. der Rauheit nachweisbar. Anhand von Topographieaufnahmen (s. Fig. 2) lassen sich die Walzrichtungen, in denen das jeweilige Stahlflachprodukt kaltgewalzt worden ist, eindeutig identifizieren. So ist in Fig. 2 eindeutig eine durch eine linienförmige Ausbildung charakterisierte Vorzugsrichtung der Rauheit feststellbar. Bei der polierten, zum Vergleich herangezogenen Probe V liegt eine solche Vorzugsrichtung dagegen nicht vor (Fig. 3).

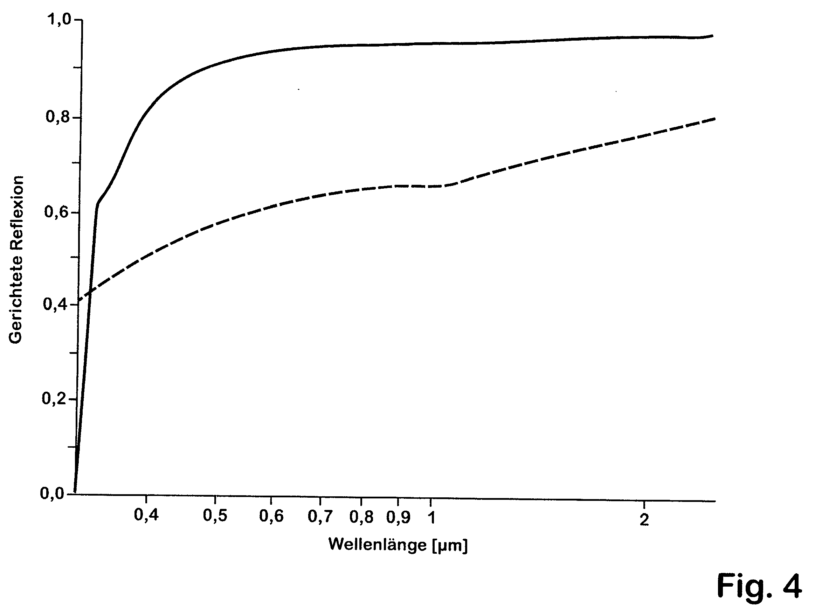

Um zu untersuchen, wie sich das Reflexionsvermögen der erfindungsgemäß erzeugten Stahlflachproduktproben durch Auftrag einer Beschichtung weiter erhöhen lässt, ist die erfindungsgemäße Stahlflachproduktprobe E1 mittels Elektronenstrahlverdampfen mit einer 90 - 100 nm dicken Silberschicht versehen worden. Durch diese Beschichtung stieg die gerichtete Reflexion im solaren Spektralbereich auf etwa 93 % und erreicht damit die Größenordnung konventioneller Glasspiegel. In Fig. 4 ist das Reflexionsvermögen der erfindungsgemäßen Probe E1 vor dem Beschichten durch eine gestrichelte Linie dargestellt, während das Reflexionsvermögen nach der Beschichtung.durch eine durchgezogene Linie wiedergegeben ist.

Schließlich ist noch in einer Nano-Identer-Messung die Härte der reflektierenden Oberflächen der Proben E1, E2 und V untersucht worden. Hier zeigte sich eine eindeutig höhere Härte bei der polierten Vergleichsprobe. Die Ergebnisse der Messungen sind in Tabelle 2 zusammengefasst.

Tabelle 2

| Probe | Härte [GPa] | Reduziertes Elastizitätsmodul [GPa] |
|---|---|---|
| E1 | 3,8 +/- 0,6 | 179 +/- 26 |
| E2 | 3,6 +/- 0,3 | 171 +/- 15 |
| V | 5,0 +/- 0,2 | 202 +/- 8 |

**Patentansprüche**

1. Verfahren zum Herstellen eines Stahlflachprodukts mit hohem Reflektionsvermögen, bei dem mindestens eine Oberfläche einen arithmetischen Mittenrauwert Ra von weniger als 0,03 $\mu$m aufweist, umfassend folgende Arbeitsschritte:

   a) Bereitstellen eines Stahlflachprodukts, bei dem mindestens eine der Oberflächen einen arithmetischen Mittenrauwert Ra von weniger als 2,5 $\mu$m aufweist;
   b) in mehreren Walzstichen erfolgendes Kaltwalzen des Stahlflachprodukts,

   - wobei die über das Kaltwalzen erzielte Gesamtverformungsrate 75 - 90 % beträgt,
   - wobei die Verformungsrate von Walzstich zu Walzstich abnimmt;
   - wobei der Walzdruck im ersten Walzstich 200 - 800 MPa und der Walzdruck im letzten Walzstich 1000 - 4000 MPa beträgt;
   - wobei das Kaltwalzen unter Zugabe eines Walzöls erfolgt, dessen Viskosität 5 - 10 mm$^2$/s bei 40 °C beträgt;
   - wobei die Walzgeschwindigkeit während des Kaltwalzens größer als 200 m/min ist;
   - wobei das Kaltwalzen mindestens im letzten Walzstich mit einer Arbeitswalze erfolgt, deren mit dem Walzgut in Kontakt kommende Umfangsfläche einen arithmetischen Mittenrauwert Ra von weniger als 0,01 $\mu$m aufweist;

   c) Glühen des erhaltenen kaltgewalzten Stahlflachprodukts unter einer Schutzgasatmosphäre mit einem Wasserstoffgehalt von mehr als 50 Vol.-%;
   und
   d) trocken erfolgendes Nachwalzen des geglühten Stahlflachprodukts mit einem Nachwalzgrad von 0,5 - 2 %;
   e) optional im Anschluss an das Nachwalzen erfolgendes Beschichten des im nachgewalzten Zustand befindlichen Stahlflachprodukts mit einer reflektierenden Beschichtung.

2. Verfahren nach Anspruch 1, **dadurch gekennzeichnet, dass** die Dicke des in Arbeitsschritt a) bereitgestellten Stahlflachprodukts höchstens 2,5 mm beträgt.

3. Verfahren nach einem der voranstehenden Ansprüche, **dadurch gekennzeichnet, dass** die Dicke des nach dem Kaltwalzen erhaltenen Stahlflachprodukts höchstens 0,4 mm beträgt.

4. Verfahren nach einem der voranstehenden Ansprüche, **dadurch gekennzeichnet, dass** das Kaltwalzen im Arbeitsschritt b) in mindestens zehn Stufen durchgeführt wird.

5. Verfahren nach einem der voranstehenden Ansprüche, **dadurch gekennzeichnet, dass** im Arbeitsschritt b) die Verformungsrate von Walzstich zu Walzstich um jeweils 5 - 10 % abnimmt.

6. Verfahren nach einem der voranstehenden Ansprüche, **dadurch gekennzeichnet, dass** im Arbeitsschritt b) die Verformungsrate im ersten Walzstich des Kaltwalzens mindestens 20 % beträgt.

7. Verfahren nach einem der voranstehenden Ansprüche, **dadurch gekennzeichnet, dass** im Arbeitsschritt b) die Verformungsrate im letzten Walzstich des Kaltwalzens weniger 10 % beträgt.

**8.** Verfahren nach einem der voranstehenden Ansprüche, **dadurch gekennzeichnet, dass** im Arbeitsschritt d) das Nachwalzen mit einer Arbeitswalze erfolgt, deren mit dem Walzgut in Kontakt kommende Oberfläche einen arithmetischen Mittenrauwert Ra von weniger als 0,03 μm aufweist.

**9.** Verfahren nach einem der voranstehenden Ansprüche, **dadurch gekennzeichnet, dass** beim optional durchgeführten Arbeitsschritt e) die Beschichtung durch ein Vakuumdampfverfahren auf das Stahlflachprodukt aufgebracht wird.

**10.** Stahlflachprodukt mit hohem Reflektionsvermögen, das im fertig nachgewalzten Zustand an mindestens einer seiner Oberflächen

- einen arithmetischen Mittenrauwert Ra von weniger als 0,03 μm mit einer parallel zur Walzrichtung des Kaltwalzens gerichteten Vorzugsrichtung,
- einen nach DIN 67530 ermittelten Glanz von > 1200 Glanzeinheiten
und
- eine gerichtete Reflexion von > 60 %

aufweist.

**11.** Stahlflachprodukt nach Anspruch 10, **dadurch gekennzeichnet, dass** es an der mindestens einen Oberfläche einen arithmetischen Mittenrauwert von weniger als 0,02 μm besitzt.

**12.** Stahlflachprodukt nach einem der Ansprüche 10 oder 11, **dadurch gekennzeichnet, dass** es an der mindestens einen Oberfläche eine Oberflächenhärte von < 4 GPa aufweist.

**13.** Stahlflachprodukt nach einem der voranstehenden Ansprüche, **dadurch gekennzeichnet, dass** es durch Anwendung des gemäß einem der Ansprüche 1 bis 9 ausgebildeten Verfahrens hergestellt ist.

**14.** Stahlflachprodukt nach einem der Ansprüche 10 bis 13, **dadurch gekennzeichnet, dass** es aus einem nicht rostenden Stahl mit einem Cr-Gehalt von mindestens 10,5 Gew.-% hergestellt ist.

**15.** Spiegelelement für Solarkonzentratoren, hergestellt aus einem gemäß einem der Ansprüche 11 bis 14 ausgebildeten Stahlflachprodukt.

**Claims**

**1.** Method for producing a flat steel product with high reflectivity, in which at least one surface has an arithmetic mean roughness Ra of less than 0.03 μm, comprising the following work steps:

a) providing a flat steel product, at least one surface of which has an arithmetic mean roughness Ra of less than 2.5 μm;
b) cold rolling of the flat steel product in a plurality of rolling passes,

- wherein the overall forming rate achieved through the cold rolling is 75 - 90 %;
- wherein the forming rate drops from rolling pass to rolling pass;
- wherein the rolling pressure in the first rolling pass is 200 - 800 MPa and the rolling pressure in the final rolling pass is 1,000 - 4,000 MPa;
- wherein the cold rolling takes place with the addition of rolling oil, the viscosity of which is 5 - 10 mm$^2$/s at 40 °c;
- wherein the rolling speed during the cold rolling is greater than 200 m/min;
- wherein the cold rolling at least in the final rolling pass takes place with a work roll the circumferential surface of which in contact with the stock has an arithmetic mean roughness Ra of less than 0.01 μm;

c) annealing of the cold-rolled flat steel product obtained under a protective gas atmosphere with a hydrogen content of more than 50 vol.%;
and
d) dry re-rolling of the annealed flat steel product with a degree of re-rolling of 0.5 - 2 %;

e) optionally subsequent to the re-rolling coating the flat steel product in the re-rolled state with a reflective coating.

2. Method according to claim 1, **characterised in that** the thickness of the flat steel product provided in work step a) is a maximum of 2.5 mm.

3. Method according to one of the above claims, **characterised in that** the thickness of the flat steel product obtained after cold rolling is a maximum of 0.4 mm.

4. Method according to one of the above claims, **characterised in that** the cold rolling in work step b) is performed in at least ten stages.

5. Method according to one of the above claims, **characterised in that** in work step b) the forming rate drops from rolling pass to rolling pass by 5 - 10 % in each case.

6. Method according to one of the above claims, **characterised in that** in work step b) the forming rate in the first rolling pass of the cold rolling is at least 20 %.

7. Method according to one of the above claims, **characterised in that** in work step b) the forming rate in the final rolling pass of the cold rolling is less than 10 %.

8. Method according to one of the above claims, **characterised in that** in work step d) the re-rolling takes place with a work roll the surface of which coming into contact with the stock has an arithmetic mean roughness Ra of less than 0.03 $\mu$m.

9. Method according to one of the above claims, **characterised in that** in the optionally performed work step e) the coating is applied to the flat steel product by a vacuum metallisation method.

10. Flat steel product with high reflectivity, which in the finished re-rolled state on at least one of its surfaces has

- an arithmetic mean roughness Ra of less than 0.03 $\mu$m with a preferred direction aligned parallel to the direction of rolling,
- a gloss determined according to DIN 67530 of > 1,200 gloss

units and

- a directed reflection of > 60 %.

11. Flat steel product according to claim 10, **characterised in that** on at least one surface it has an arithmetic mean roughness of less than 0.02 $\mu$m.

12. Flat steel product according to either of claims 10 or 11, **characterised in that** on at least one surface it has a surface hardness of < 4 GPa.

13. Flat steel product according to one of the above claims, **characterised in that** it is produced using the method developed according to one of claims 1 to 9.

14. Flat steel product according to one of claims 10 to 13, **characterised in that** it is made from a stainless steel with a Cr content of at least 10.5 wt.%.

15. Mirror element for solar concentrators, produced from a flat steel product developed according to one of claims 11 to 14.

**Revendications**

1. Procédé de fabrication d'un produit d'acier plat à haut pouvoir de réflexion, dans lequel au moins une surface présente une rugosité Ra, calculée selon la moyenne arithmétique, inférieure à 0,03 $\mu$m, comportant les étapes de traitement suivantes :

a) mise à disposition d'un produit d'acier plat, dans lequel au moins une surface présente une rugosité Ra, calculée selon la moyenne arithmétique, inférieure à 2,5 $\mu$m ;

b) laminage à froid effectué en plusieurs passes de laminage du produit d'acier plat,

- tel que le taux de déformation total atteint par le laminage à froid est de 75 à 90 %,
- tel que le taux de déformation diminue d'une passe de laminage à l'autre ;
- tel que la pression de laminage est de 200 à 800 MPa lors de la première passe et de 1 000 à 4 000 MPa lors de la dernière passe ;
- tel que le laminage à froid s'effectue sous adjonction d'une huile de laminage, dont la viscosité est de 5 à 10 mm²/s à la température de 40 °C ;
- tel que pendant le laminage à froid, la vitesse du laminage est supérieure à 200 m/min ;
- tel que, au moins au cours de la dernière passe de laminage, le laminage à froid est effectué à l'aide d'un cylindre de laminage, dont les surfaces périphériques entrant en contact avec le produit à laminer présentent une rugosité Ra, calculée selon la moyenne arithmétique, inférieure à 0,01 $\mu$m ;

c) recuit du produit d'acier plat obtenu par laminage à froid, sous une atmosphère de gaz protecteur ayant une teneur en hydrogène supérieure à 50 % en volume ;
et

d) post-laminage en phase sèche du produit d'acier plat recuit, avec un taux de post-laminage de 0,5 à 2 % ;

e) de façon optionnelle et faisant suite au post-laminage, opération de recouvrement du produit d'acier plat se trouvant dans l'état de post-laminage par une couche de recouvrement réflective.

**2.** Procédé selon la revendication 1, **caractérisé en ce que** l'épaisseur du produit d'acier plat mis à disposition au cours de l'étape de traitement a) est d'au plus 2,5 mm.

**3.** Procédé selon l'une quelconque des revendications précédentes, **caractérisé en ce que** l'épaisseur du produit d'acier plat obtenu après le laminage à froid est d'au plus 0,4 mm.

**4.** Procédé selon l'une quelconque des revendications précédentes, **caractérisé en ce que** le laminage à froid spécifié à l'étape de traitement b) est exécuté en au moins dix passes.

**5.** Procédé selon l'une quelconque des revendications précédentes, **caractérisé en ce que**, à l'étape de traitement b), le taux de déformation diminue à chaque passe de 5 à 10 %.

**6.** Procédé selon l'une quelconque des revendications précédentes, **caractérisé en ce que**, à l'étape de traitement b), le taux de déformation atteint au cours de la première passe est d'au moins 20 %.

**7.** Procédé selon l'une quelconque des revendications précédentes, **caractérisé en ce que**, à l'étape de traitement b), le taux de déformation atteint au cours de la dernière passe est inférieur à 10 %.

**8.** Procédé selon l'une quelconque des revendications précédentes, **caractérisé en ce que**, à l'étape de traitement d), le post-laminage est effectué avec un cylindre de laminage dont les surfaces entrant en contact avec le produit à laminer présentent une rugosité Ra, calculée selon la moyenne arithmétique, inférieure à 0,03 $\mu$m.

**9.** Procédé selon l'une quelconque des revendications précédentes, **caractérisé en ce qu'**à l'étape de traitement optionnel e), le recouvrement est enduit sur le produit d'acier plat par un procédé de vaporisation sous vide.

**10.** Produit d'acier plat à haut pouvoir de réflexion, qui, à l'état de post-laminage achevé, présente sur au moins une de ses faces

- une rugosité Ra, calculée selon la moyenne arithmétique, inférieure à 0,03 $\mu$m, ayant une direction privilégiée orientée parallèlement à la direction de laminage du laminage à froid,
- une brillance supérieure à 1 200 unités de brillance, déterminée selon DIN 67530
et
- une réflexion dans une direction déterminée supérieure à 60 %.

**11.** Produit d'acier plat selon la revendication 10, **caractérisé en ce qu'**il possède sur au moins une de ses faces une rugosité Ra, calculée selon la moyenne arithmétique, inférieure à 0,02 $\mu$m.

**12.** Produit d'acier plat selon la revendication 10 ou 11, **caractérisé en ce qu'**il possède sur au moins une de ses faces une dureté superficielle inférieure à 4 GPa.

**13.** Produit d'acier plat selon l'une quelconque des revendications précédentes, **caractérisé en ce qu'**il est obtenu par l'application d'un processus défini selon l'une quelconque des revendications 1 à 9.

**14.** Produit d'acier plat selon l'une quelconque des revendications 10 à 13, **caractérisé en ce qu'**il est obtenu à partir d'un acier inoxydable à teneur en Cr d'au moins 10,5 % en poids.

**15.** Élément de miroir destiné à des concentrateurs solaires, obtenu à partir d'un produit d'acier plat traité conformément à l'une des revendications 11 à 14.

Fig. 1

Fig. 2

Fig. 3

Fig. 4

**Fig. 5**

EP 2 712 685 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5912777 A
- JP 7155809 A
- JP 199876109 A
- JP 1992340706 A
- EP 0694620 A1
- DE 19505324 A1
- US 3556874 A
- US 5986205 A
- EP 0597169 A1